# EUROPÄISCHE PATENTANMELDUNG

(11) **EP 2 703 365 A1**
(43) Veröffentlichungstag der Anmeldung: **05.03.2014**
(21) Anmeldenummer: 13178351.6
(22) Anmeldetag: 29.07.2013
(51) Int. Cl.: C02F 11/12, F26B 3/04, F26B 25/04, F26B 3/20, F26B 17/00

(54) **Vorrichtung zum Trocknen von Klärschlamm**

(30) Priorität: 28.08.2012 DE 102012107915
(71) Anmelder: I + M Verwaltungs-GmbH, 72401 Haigerloch-Gruol (DE)
(72) Erfinder: Zizmann, Richard, 72401 Haigerloch-Owingen (DE); Volm, Melanie, 72406 Bisingen (DE)
(74) Vertreter: Späth, Dieter

(57) **Zusammenfassung**

Die Erfindung betrifft eine Vorrichtung (1) zum Trocknen von Klärschlamm (2). Die Erfindung schlägt ein drehend antreibbares Karussell (7) mit Zinken (14) zum Lockern und Wenden des Klärschlamms (2) vor.

## Beschreibung

Die Erfindung betrifft eine Vorrichtung zum Trocknen von Klärschlamm oder der gleichen Biomasse mit den Merkmalen des Oberbegriffs des Anspruchs 1.

Eine derartige Vorrichtung ist bekannt aus der europäischen Patentanmeldung EP 1 464 628 A1. Die bekannte Vorrichtung weist eine Trockenfläche auf, auf die der Klärschlamm an einem Ende aufbringbar ist. Zum Fördern des Klärschlamms über die Trockenfläche weist die bekannte Vorrichtung einen Endlosförderer mit zwei parallelen, um Rädern umlaufenden Seilen auf, an denen Traversen angebracht sind, die durch Antrieb der Seile über die Trockenfläche bewegbar sind. An den Traversen sind pflugscharartige Schlammwender angebracht, die den Klärschlamm auf der Trockenfläche durchpflügen und dabei Wenden und Auflockern sowie bei jedem Durchgang ein Stück weit über die Trockenfläche bewegen. Letzteres bedeutet, dass der Klärschlamm über die Trockenfläche gefördert wird.

Aufgabe der Erfindung ist eine konstruktiv andere Vorrichtung zum Trocknen von Klärschlamm vorzuschlagen.

Diese Aufgabe wird erfindungsgemäß durch die Merkmale des Anspruchs 1 gelöst. Wie die bekannte Vorrichtung weist auch die erfindungsgemäße Vorrichtung eine Lockerungs- und Wendeeinrichtung für den Klärschlamm auf, die parallel zu bzw. über eine Trockenfläche bewegbar ist. Im Unterscheid zur bekannten Vorrichtung nicht gerade, sondern bewegt sich die Lockerungs- und Wendeeinrichtung der erfindungsgemäßen Vorrichtung auf einer Kreisbahn, d.h. sie dreht sich um eine Achse senkrecht zur Trockenfläche, wobei die Achse nicht körperlich vorhanden sein muss und die Lockerungs- und Wendeeinrichtung bis zur Achse reichen kann, allerdings nicht muss. Die Erfindung geht weg von einer geradlinigen Förderbewegung zu einer Drehbewegung.

Die Lockerungs- und Wendeeinrichtung dient zum Lockern, Wenden, Zerkleinern und zu einer Zerkrümelung des Klärschlamms, wobei nicht alle diese Merkmale erreicht werden müssen, sondern eines oder mehrere der Merkmale erreicht werden sollten. Die Lockerungs- und Wendeeinrichtung arbeitet vergleichbar einem Pflug oder einer Egge. Beim Durchgang durch den Klärschlamm bewegt die Lockerungs- und Wendeeinrichtung den Klärschlamm auch ein stückweit in eine Umfangs- oder Sekanterichtung, sodass der Klärschlamm in Sekantenrichtungen oder auf spiralförmigen Bahnen über die Trockenfläche bewegt wird.

Außer Klärschlamm, wofür die erfindungsgemäße Vorrichtung vorgesehen ist, lässt sie sich auch für andere Biomasse oder allgemein für schüttfähige bis pastöse Massen verwenden.

In bevorzugter Ausgestaltung der Erfindung weist die Lockerungs- und Wendeeinrichtung ein Karussell auf, dass um eine Achse senkrecht zur Trockenfläche drehbar ist und von dem Lockerungs- und Wendeelemente zur Trockenfläche abstehen. Unter einem Karussell ist eine um eine Achse drehbare oder auf einer Kreisbahn bewegbare Einrichtung zu verstehen, die beispielsweise eine Platte insbesondere eine kreisförmige Platte, oder Arme nach Art von Speichen eines Rads bzw. zumindest einen solchen Arm aufweist, die sich von innen nach außen erstrecken, allerdings weder zwingend gerade sind noch sich zwingend radial erstrecken. Die vom Karussell zur Trockenfläche abstehenden Lockerungs- und Wendeelemente können die Trockenfläche berühren, zur Vermeidung von Verschleiß und Reibung weisen sie vorzugsweise einen Abstand von der Trockenfläche auf. Bei einer Drehung des Karussells bewegen sich die Lockerungs- und Wendeelemente durch auf die Trockenfläche ausgebrachten Klärschlamm, beispielsweise durchpflügen oder durchfurchen die Lockerungs- und Wendeelemente den Klärschlamm auf der Trockenfläche.

Eine Ausgestaltung der Erfindung sieht stiftförmige Lockerungs- und Wendeelemente beispielweise nach Art von Zinken einer Egge vor. Allerdings sind auch andere Lockerungs- und Wendeelemente möglich, beispielsweise paddel- oder pflugförmige.

Eine Ausgestaltung der Erfindung sieht einen Eintrag für den Klärschlimm in oder nahe einer Mitte der Kreisbahn der Lockerungs- und Wendeeinrichtung und einen Austrag für den Klärschlamm an einem Umfang der Lockerungs- und Wendeeinrichtung, also an ihrem radial äußeren Ende, vor. Durch die Bewegung der auf einer Kreisbahn bewegt die Lockerungs- und Wendeeinrichtung den Klärschlamm in einer Sekanten- oder Umfangsrichtung und mit einer nach außen gerichteten Komponente, sodass der Klärschlamm auf beispielsweise Spiralbahnen vom Eintrag über die Trockenfläche zum Austrag gelangt. Paddel-, pflug- und ähnlichförmige Lockerungs- und Wendeeinrichtungen ermöglichen eine Bewegung des Klärschlamms auch nach innen, was einen Eintrag außen am Umfang und einen Austrag innen ermöglicht. Stifte und dgl. sind preiswerte, einfache und robuste Lockerungs- und Wendeelemente, die ausreichen, um den Klärschlamm zu lockern, zu wenden, zu zerkleinern und zu zerkrümeln und die bei Verschleiß und Beschädigung einfach austauschbar sind.

Eine Ausgestaltung der Erfindung sieht eine Umfassung der Trockenfläche vor. Klärschlamm, der zur Umfassung gelangt, bewegt sich bei der Kreisbewegung der Lockerungs- und Wendeeinrichtung innen an der Umfassung entlang bis er zum Austrag gelangt oder in anderer Weise entnommen wird. Der Eintrag ist die Stelle, an der der Klärschlamm auf die Trockenfläche verbracht wird, der Austrag die Stelle, an der er entfernt wird, wobei der Austrag ein Loch oder eine Öffnung in der Trockenfläche oder einer Umfassung sein kann durch die der Klärschlamm von der Trockenfläche fällt oder aus der Vorrichtung austritt.

Eine Ausgestaltung der Erfindung sieht eine Abdeckung vor, die feststehend oder auf der Lockerungs- und Wendeeinrichtung angeordnet sein kann, letzteres insbesondere wenn die Lockerungs- und Wendeeinrichtung ein Karussell aufweist. Die Abdeckung verhindert, dass Regen auf den Klärschlamm gelangt und ermöglicht die Führung eines Luftstroms zur Trocknung über den Klärschlamm auf der Trockenfläche. Des Weiteren hält die Abdeckung Wärme unter sich und kann zur Erzeugung von Wärme durch Sonnenstrahlen dienen. Die Abdeckung sollte niedrig angeordnet, d. h. ein Freiraum über dem Klärschlamm niedrig sein, um bei einer Lüftung eine hohe Luftgeschwindigkeit zu erzielen, die die Trocknung beschleunigt.

Eine bevorzugte Ausgestaltung der Erfindung sieht einen Lüftung zum Trocknen des Klärschlamms vor, die Luft über den auf der Trockenfläche ausgebrachten Klärschlamm bewegt. Diese Ausgestaltung der Erfindung wird insbesondere zusammen mit der Abdeckung der Vorrichtung verwirklicht. Die Bewegung der Lockerungs- und Wendeeinrichtung auf einer Kreisbahn ermöglicht eine vergleichsweise einfache Lüftung durch Luftzu- oder Abfuhr im Zentrum der Vorrichtung.

Eine Ausgestaltung der Erfindung sieht feststehende Abstreifer vor, die bei einer Bewegung der Lockerungs- und Wendeeinrichtung Klärschlamm von Lockerungs- und Wendeelementen der Lockerungs- und Wendeeinrichtung abstreifen. Die Abstreifer sind beispielsweise Stifte, Platten oder Bügel, die von der Trockenfläche nach oben abstehen und radial zwischen den Lockerungs- und Wendeelementen der Lockerungs- und Wendeeinrichtung angeordnet sind, sodass sich die Lockerungs- und Wendeelemente bei der Bewegung der Lockerungs- und Wendeeinrichtung auf der Kreisbahn zwischen den Abstreifern hindurch bewegen. Außer Klärschlamm von den Lockerungs- und Wendeelementen abzustreifen wirken die Abstreifer auch an der Zerkleinerung und Zerkrümelung des Klärschlamms mit.

Eine Ausgestaltung der Erfindung sieht eine Heizung der Trockenfläche vor.

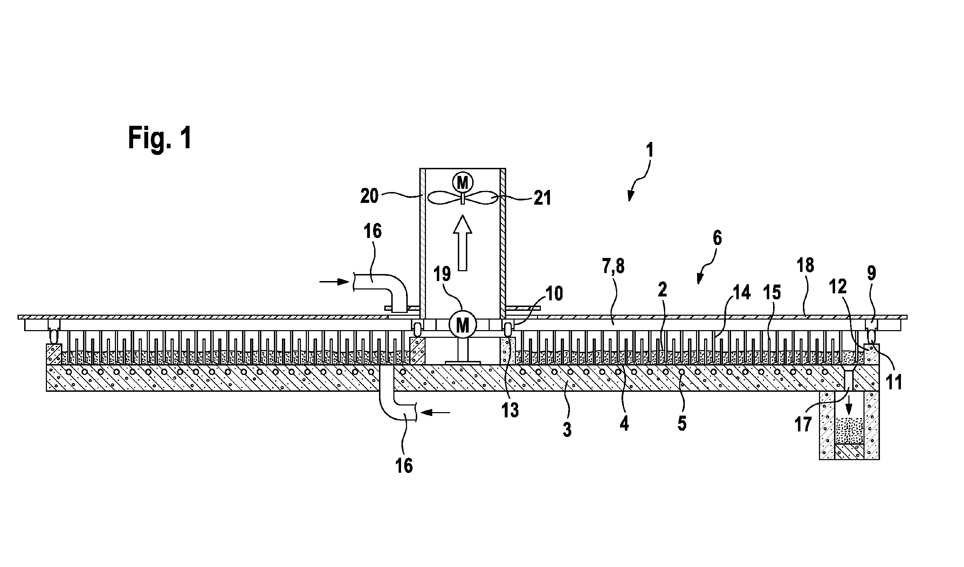

Die Erfindung wird nachfolgend anhand eines in der Zeichnung dargestellten Ausführungsbeispiels näher erläutert. Die einzige Figur zeigt einen Achsschnitt einer erfindungsgemäßen Vorrichtung. Die Zeichnung ist als vereinfachte und schematisierte Darstellung zur Erläuterung und zum Verständnis der Erfindung zu verstehen.

Die in der Zeichnung dargestellte erfindungsgemäße Vorrichtung 1 dient zum Trocknen von Klärschlamm, kann allerdings auch zum Trocknen anderer Biomasse oder allgemein von Schüttgut oder pastösen Massen verwendet werden. Sie weist eine kreisförmige Bodenplatte 3 aus stahlarmiertem Beton auf, deren Oberseite eine Trockenfläche 4 bildet. In die Bodenplatte 3 sind Heizrohre 5 nach Art einer Fußbodenheizung zum Erwärmen eingegossen.

Über der Bodenplatte 3 ist eine Lockerungs- und Wendeeinrichtung 6 für den Klärschlamm 2 angeordnet, die auf einer Kreisbahn um eine gedachte Mittelachse senkrecht zur Bodenplatte 3 bewegbar ist. Die Lockerungs- und Wendeeinrichtung 6 weist ein Karussell 7 auf, das um die Mittelachse der Trockenfläche drehbar ist. Im Ausführungsbeispiel ist das Karussell 7 nach Art eines Speichenrads mit radial nach Art von Speichen eines Rads angeordneten Balken 8 ausgebildet, die am Außenumfang mit einem Radreifen 9 verbunden und innen mit einem Nabenring 10 verbunden sind. Außen ist das Karussell 7 am Radreifen 9 mit Rollen 11 auf einer kreisförmigen Umfassung 12 der Bodenplatte 3 wälzgelagert oder mit nicht dargestellten Kufen, Gleitleisten oder dgl. gleitgelagert. Innen ist das Karussell 8 am Nabenring 10 mit einem Rollendrehwerk 13, das auch als Drehkranz bezeichnet werden kann, drehbar um die Mittelachse der Bodenplatte 3 gelagert, die zugleich eine Mittel- und eine Drehachse des Karussells 8 und der Vorrichtung 1 insgesamt ist.

Von den Balken 8 der Lockerungs- und Wendeeinrichtung 6 stehen stiftförmige Lockerungs- und Wendeelemente 14 nach unten zur Bodenplatte 3 ab, die mit geringem Abstand über der Bodenplatte 3 und damit über der Trockenfläche 4 enden. Bei einem Drehantrieb des Karussells 7 der Lockerungs- und Wendeeinrichtung 6 durchfurchen die Lockerungs- und Wendeelemente 14 den auf der Bodenplatte 3 ausgebrachten Klärschlamm 2 nach Art von Zinken einer Egge. Dabei wird der Klärschlamm 2 gelockert, gewendet, zerkleinert und / oder zerkrümelt. Außerdem wird der Klärschlamm 2 durch die Bewegung der Lockerungs- und Wendeelemente 14 spiralförmig von innen nach außen über die Trockenfläche 4 bewegt.

Von der Bodenplatte 3 stehen stiftförmige Abstreifer 15 nach oben, die radial zwischen den Lockerungs- und Wendeelementen 14 angeordnet sind, sodass sich die Lockerungs- und Wendeelemente 14 bei Drehung des Karussells 7 der Lockerungs- und Wendeeinrichtung 6 zwischen den Abstreifern 15 hindurch bewegen. Die Abstreifer 15 streifen Klärschlamm von den Lockerungs- und Wendeelementen 14 ab und wirken bei der Zerkleinerung und Zerkrümelung des Klärschlamms 2 mit. Zwischen den Lockerungs- und Wendeelementen 14 und den Abstreifern 15 besteht Abstand, sie streifen einander nicht. Die Abstreifer 15 sind sowohl von innen bis außen als auch in Umfangsrichtung verteilt auf der Bodenplatte 3 angeordnet. Es sind grundsätzlich beliebige Verteilungen der Abstreifer 15 möglich. Die Abstreifer 15 müssen nicht stiftförmig sein.

Ein Eintrag des Klärschlamms 2 auf die Trockenfläche 4 erfolgt beispielsweise durch ein Rohr 16 nahe außerhalb des Rollendrehwerks 13 zwischen den Balken 8 des Karussells 7, durch die Bodenplatte 3 oder durch eine innere Begrenzung der Trockenfläche 4 hindurch. Der Eintrag kann auch mittels eines Förderbandes (nicht gezeichnet) erfolgen, die Aufzählung ist beispielhaft und nicht abschließend. Zum Austrag weist die Bodenplatte 3 eine Öffnung 17 nahe ihres Umfangs innerhalb der Umfassung 12 auf, durch die der Klärschlamm 2 durch die Bodenplatte 3 fällt. Der Austrag kann auch durch eine Öffnung in der Umfassung 12 erfolgen (nicht gezeichnet). Auch beim Austrag sind andere Möglichkeiten nicht ausgeschlossen. Bei einer Drehung des Karussells 7 der Lockerungs- und Wendeeinrichtung 6 bewegen sich die Lockerungs- und Wendeelemente 14 auf Kreisbahnen um die Mittelachse über die Trockenfläche 4. Außer den Klärschlamm 2 zu lockern, zu wenden, zu zerkleinern und zu zerkrümeln bewegen die Lockerungs- und Wendeelemente 14 bei ihrer Kreisbewegung den Klärschlamm 2 auf spiralförmigen Bahnen von innen nach außen über die Trockenfläche 4, sodass der Klärschlamm 2 vom Eintrag 16 spiralförmig nach außen zur Umfassung 12 gelangt. Dort bewegt er sich solange kreisförmig weiter, bis er zum Austrag 17 gelangt und von der Bodenplatte 3 fällt oder seitlich durch die nicht gezeichnete Öffnung in der Umfassung 12 gelangt.

Auf den Balken 8 des Karussells 7 der Lockerungs- und Wendeeinrichtung 6 ist eine lochscheibenförmige Abdeckung 18 angebracht, die Klärschlamm 2 vor Regen schützt, Wärme unter sich hält und bei Sonneneinstrahlung die Vorrichtung 1 unter sich erwärmt.

Ein Drehantrieb des Karussells 7 kann außen erfolgen, im Ausführungsbeispiel wird das Karussell 7 von einem in der Mitte angeordneten Elektromotor 19 über ein nicht dargestelltes Untersetzungsgetriebe drehend angetrieben.

In der Mitte, in der die lochscheibenförmige Abdeckung 18 offen ist, weist das Karussell 7 einen stehenden Abluftkamin 20 mit einem elektromotorisch angetriebenen Ventilator 21 auf. Der Ventilator 21 saugt Luft unter der Abdeckung 18 an, die radial von außen nachströmt. Die Luft überstreicht den Klärschlamm 2 und trocknet ihn. Eine Umkehrung der Luftströmung ist möglich. Die Abdeckung 18, der Abluftkamin 20 und der Ventilator 21 bilden eine Lüftung, die Luft zum Trocknen über den Klärschlamm 2 bewegt. Die Abdeckung 18 ist in geringer Höhe über dem Klärschlamm 2 angeordnet um eine hohe Luftgeschwindigkeit zu erzielen, die die Trocknungsleistung erhöht.

## Patentansprüche

1. Vorrichtung zum Trocknen von Klärschlamm oder dergleichen Biomasse, mit einer Trockenfläche (4), auf die der Klärschlamm (2) zum Trocknen ausbringbar ist, und mit einer Lockerungs- und Wendeeinrichtung (6) für den Klärschlamm (2), die parallel zur Trockenfläche (4) bewegbar ist, **dadurch gekennzeichnet, dass** sich die Lockerungs- und Wendeeinrichtung (6) auf einer Kreisbahn bewegt.

2. Vorrichtung nach Anspruch 1, **dadurch gekennzeichnet, dass** die Lockerungs- und Wendeeinrichtung (6) ein Karussell (7) aufweist, das um eine Achse senkrecht zur Trockenfläche (4) drehbar ist und von dem Lockerungs- und Wendeelemente (14) zur Trockenfläche (4) abstehen.

3. Vorrichtung nach Anspruch 1 oder 2, **dadurch gekennzeichnet, dass** die Lockerungs- und Wendeeinrichtung (6) stiftförmige Lockerungs- und Wendeelemente (14) aufweist.

4. Vorrichtung nach einem der Ansprüche 1 bis 3, **dadurch gekennzeichnet, dass** die Vorrichtung (1) einen Eintrag (16) für den Klärschlamm (2) nahe einer Mitte der Kreisbahn der Lockerungs- und Wendeeinrichtung (6) und einen Austrag (17) für den Klärschlamm (2) an einem Umfang der Lockerungs- und Wendeeinrichtung (6) aufweist.

5. Vorrichtung nach einem der Ansprüche 1 bis 4, **dadurch gekennzeichnet, dass** die Vorrichtung (1) eine Umfassung (12) aufweist.

6. Vorrichtung nach einem der Ansprüche 1 bis 5, **dadurch gekennzeichnet, dass** die Vorrichtung (1) eine Abdeckung 18 aufweist.

7. Vorrichtung nach einem der vorhergehenden Ansprüche, **dadurch gekennzeichnet, dass** die Vorrichtung (1) eine Lüftung (18), (20), (21) zum Trocknen des Klärschlamms (2) aufweist, die Luft über den auf der Trockenfläche 4 ausgebrachten Klärschlamm (2) bewegt.

8. Vorrichtung nach einem der vorgehenden Ansprüche, **dadurch gekennzeichnet, dass** die Vorrichtung (1) feststehende Abstreifer (15) aufweist, die bei einer Bewegung der Lockerungs- und Wendeeinrichtung (6) Klärschlamm von Lockerungs- und Wendeelementen (14) der Lockerungs- und Wendeeinrichtung (6) abstreifen.

9. Vorrichtung nach einem der vorhergehenden Ansprüche, **dadurch gekennzeichnet, dass** die Trockenfläche (4) eine Heizung (5) aufweist.
